# EUROPEAN PATENT APPLICATION

(11) **EP 3 422 281 A1**
(43) Date of publication of application: **02.01.2019**
(21) Application number: 17179090.0
(22) Date of filing: 30.06.2017
(51) Int. Cl.: G06Q 50/04, H04L 9/32

(54) **BLOCKCHAIN DATABASE FOR ADDITIVE MANUFACTURING**

(71) Applicant: Siemens Aktiengesellschaft, 80333 München (DE)
(72) Inventor: Graichen, Andreas, 60214 Norrköping (SE)

(57) **Abstract**

A blockchain (BC) database representing an additive manufacturing process is presented, the blockchain (BC) comprising a plurality of data blocks (B1, B2), wherein integrity of the blockchain (BC) is ensured by cryptographic encoding of consecutive blocks (B1, B2) of the blockchain (BC), and wherein each block (B1, B2) of the blockchain (BC) holds data (D1, D2, I1, 12) about an additive manufacturing process of a component (10) which is to be manufactured via an additive manufacturing device (100), wherein data (D1, D2, I1, 12) of each layer (L1, L2) for the component (10) is linked in a separate block (B1, B2) of the blockchain (BC).

## Description

The present invention relates to a blockchain database representing an additive manufacturing process or build job of a component. Further, an according method of encoding data of the component via the block chain is presented and a corresponding distributed network, wherein nodes or nodes are connected via the blockchain. Still further, the use of the blockchain database for quality assurance, particularly for enabling a manipulation proof documentation or certification in the additive manufacture of components is presented.

Additive manufacturing (AM) techniques may relate to Powder Bed Fusion (PBF) methods, e.g. Selective Laser Melting (SLM) or Electron Beam Melting (EBM), or Directed Energy Deposition (DED). Further, AM may relate to Laser Metal Deposition (LMD), for example.

Additive manufacturing methods have proven to be useful and advantageous in the fabrication of prototypes or complex and filigree components, such as lightweight design or cooling components comprising mazelike internal structures. Further, additive manufacture stands out for its short chain of process steps, as a manufacturing step can be carried out directly based on corresponding CAD/CAM and/or construction data.

Preferably, the component denotes a metallic or ceramic component applied in a turbo machine, e.g. in the flow path hardware of a gas turbine. The component is thus preferably made of a superalloy or nickel-based alloy, particularly a precipitation, solution or age hardened alloy.

The term "additive" in the context of manufacturing shall particularly denote a layer-wise, generative and/or bottom-up manufacturing process.

A method of selective laser melting is described in EP 2 601 006 B1, for example.

WO2017027648A1 further describes a system for tracking and recording the chain-of-custody for assets within a supply chain that creates a non-repudiatable electronic log of each custody transfer at each transfer point from initial creation, to final transfer or disposal. In one embodiment, the system uses encryption technology to register assets that are to be transferred and whose chain of custody is to be ensured. Through use of encryption key pairs and blockchain encryption technology, an electronic document is created in an encrypted transaction log updated at each change of custody point.

Indeed, there is no officially standardized and secured way of documenting the progression of an additive manufacturing process, today. Even if there are built in, automated data acquisition methods in place, an AM-manufacturer could be tempted to "cheat" a customer by manipulating process data, component data and/or quality assurance (QA-) data in a favorable way. The mere reproduction or plagiarism of the (shape of) the component is rather easy.

Falsification of such data is expected to become even more likely, the more complex the component or its structure or alloy composition becomes. Thermally stressed parts of turbines made of superalloys are e.g. required to provide excellent mechanical strength, resistance to thermal creep deformation, good surface stability, and resistance to corrosion or oxidation. Development of superalloy components thus heavily relies on physical, chemical and, particularly process innovations.

This potential distrust prevents a realization of certified and secure root of additive component production and/or digital handling of the corresponding data files. It seems that, up to now, i.e. in traditional, classical manufacturing, only stamps, paper or personal witness confirmations were used in order to confirm correctness of a statement or documentation. Such measures are, however, not suitable anymore in view of the current industrial changes, e.g. the increasing impact of digitalization.

With the use of blockchain (encryption) technology, which is also known from the digital currency bitcoin, documents can be fully traceable and all possible changes can be tracked such that any manipulation will clearly be apparent.

It is, thus, an object of the present invention to provide means that solve the mentioned problems, respectively address the mentioned needs.

The mentioned object is achieved by the subject-matters of the independent claims. Advantageous embodiments are subject-matter of the dependent claims.

An aspect of the present invention relates to a blockchain or blockchain database representing an additive manufacturing process or build job of a component. The blockchain or blockchain database is expediently an encoded or encrypted dataset or data sequence which is "secure by design". The blockchain comprises a plurality or series of data blocks, wherein integrity, provenance, assurance or security against manipulation of the blockchain is ensured by cryptographic encoding or encryption of consecutive blocks of the blockchain.

The term "encoding" may also relate to linking or hashing as is known in blockchain technology. Said term "hashing" may in turn relate to the storage of a hash value in each block that represents the hash value of the prior block. Along with the storage of hash values, a timestamp and link to the previous block can be set or generated.

Each block of the blockchain holds or records data about, i.e. of or for, an additive manufacturing process of a component which is to be manufactured in or via an additive manufacturing device.

Data or information of each layer, or slice stacked along a build direction, of the component, is linked, encoded or chained in a separate block of the blockchain.

The given blockchain provides the advantage of a secure or manipulation-proof additive manufacturing process or workflow. Particularly, a trustworthy and untampered certification of conformity or a certain standard of e.g. additively manufactured components can be presented or facilitated by means of which an AM-manufacturer can prove integrity or guarantee correctness/authenticity of his process and/or product, i.e. the component manufactured by AM. Falsification, counterfeit or tampering of the product, component or properties thereof can thus reliably be prevented. For example, (digital) handling of AM-data files or parts which can be manufactured from said files can be provided with certification and also (legal) certainty that the product is indeed manufactured with given quality standards. Thereby, the manufacturer does not need to rely on statements of e.g. for the machine vendor or parties involved in the supply chain, work or process flow.

The given certification or verification represents a crucial aspect for today's manufacturing technology, which is subject to great, even disruptive changes due to ever increasing importance of digitalisation and/or the increasing impact of industry 4.0 or the Internet of Things.

A further aspect of the present invention relates to the use of a blockchain database for quality assurance in the additive manufacture of the component, particularly for enabling a manipulation-proof documentation or certification of the manufacturing process.

A further aspect of the present invention relates to a method of encoding or encrypting data of each layer of or for the component in a separate block of the blockchain, e.g. during the manufacture of the component. The method of encoding may be performed by a computer program e.g. executed on a data processing device or compouter. The blockchain (database) may be stored on a computer readable (storage) medium.

In an embodiment, the data or information of layers which are to be manufactured for the component or its predetermined geometry, are (directly) consecutively linked in consecutive blocks of the blockchain. This embodiment enables expediently the application of blockchain encryption mechanisms to additive manufacturing processes, preferably in the field of layerwise selective, powder bed based processes which require prior (digital) slicing of the component, e.g. in a CAD-file.

The term "layer" as used herein preferably denotes a physical section or slice of the (physical) component and not a virtual layer or application along with blockchain algorithms.

In an embodiment, the data or information of each layer comprises CAD data, such as geometry data or information, CAM data and/or numerical control data of or for the component, or its manufacture.

In an embodiment the data or information comprises data or information collected or read out from the manufacturing device or corresponding machine or hardware or a further sensor device. According to this embodiment, the data may represent temperature data or information, pressure data, data referring to the gas flow in the device and/or data describing beam properties for example.

In an embodiment, the data or information of each layer comprises optical, microscopical and/or image information or data characterizing a corresponding powder bed.

In an embodiment, the data of each layer comprises information about a melt pool.

Accordingly, the additive manufacturing process is preferably an SLM, or EBM process.

The data may as well pertain to the surveillance of the melt pool e.g. by way of quality assurance or control of each as-manufactured single layer of the component. According to this embodiment, said data may pertain to an in-situ-monitoring of the component and/or the melt pool.

It is to be understood that the mentioned data of each layer, preferably, comprises as much information about the AM process as possible in order to allow for an optimal reproducibility of the component to be manufactured and/or for a comprehensive quality control.

The presented blockchain functionality goes beyond state of the art quality assurance means which are already provided by AM machine vendors, as the manufacturer using the one AM machine can guarantee and prove quality of the manufactured part or component and does not need to rely on his assertions or on the statements of the respective machine vendor.

A further aspect of the present invention relates to a distributed or decentralized network or system comprising a plurality of or at least one node or interface, wherein said nodes are connected via the blockchain either in a readable or encrypted way, such that an accordingly authorized party, such as a client or even a data processing and/or additive manufacturing device can access or interact with the network.

A further aspect of the present invention relates to a computer program and/or computer program product executing or comprising the blockchain as described.

Advantages or embodiments relating to the described database and/or the described network or system may as well pertain to the described method or use, or vice versa.

Further features, expediencies and advantageous refinements become apparent from the following description of the exemplary embodiment in connection with the Figures.
Figure 1 shows a detailed schematic diagram of a distributed network comprising a blockchain database.
Figure 2 shows a general schematic diagram of a distributed network utilizing the blockchain database of Figure 1.

Like elements, elements of the same kind and identically acting elements may be provided with the same reference numerals in the Figures.

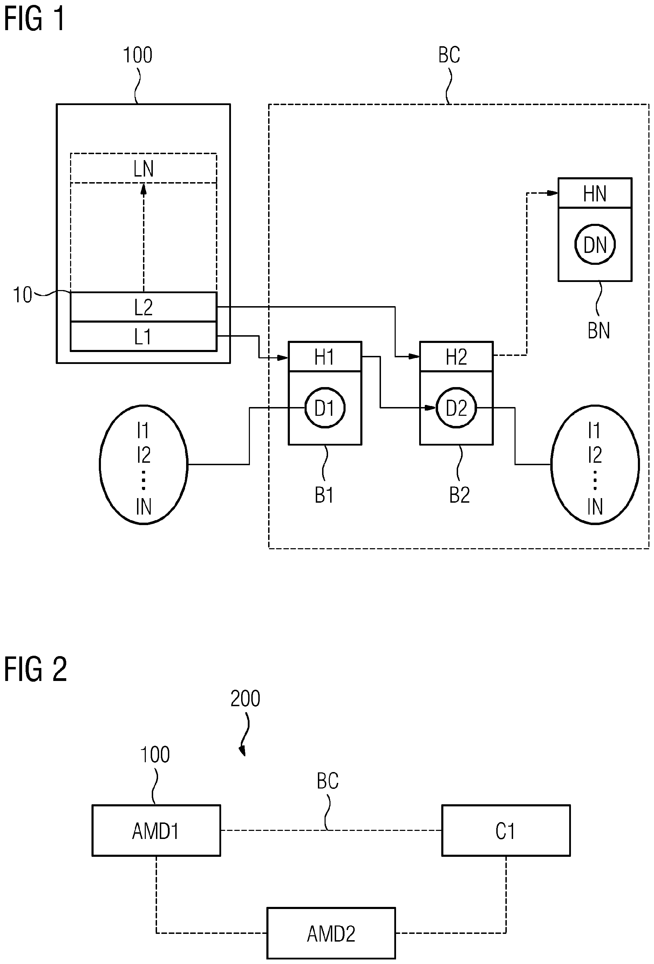

Figure 1 shows an additive manufacturing device 100 (cf. also reference numeral AMD1 and AMD2 in Figure 2). Said device or machine, preferably, relates to a powder bed based additive manufacturing process, such as SLM or EBM. In the schematic of Figure 1, the component 10 is shown actually being manufactured in the device 100. Therefore, a first layer L1 and a second layer L2 are already physically built or established, e.g. by way of melting and subsequent solidification as a consequence of exposure of an energy beam, such as a laser beam for example. The layer L2 is directly established on top of layer L1. In other words, layer L2 is directly consecutive to layer L1. The component 10 is, preferably according to its predetermined geometry, to be established up to layer LN, which represents the final layer of the component 10 (cf. dashed lines). Depending on the desired size geometry of the component, particularly in the field of gas turbine components or components made of superalloys, such as nickel alloys, components may easily be manufactured by layerwise solidification of thousands or tens of thousands of layers by scanning with a laser beam. Thereby, the beam must be computer controlled or numerically controlled, as the process chamber (not explicitly indicated) shields the dangerous beam tool (laser or EB) from the surrounding.

Moreover, the speed of the laser beam may exceed 300mm/s further, depending on volume of the component, a manufacturing duration may amount to 160 hours. Determining the resolution or surface roughness of the component, the precision or spatial resolution of the beam tool and precision is, preferably, below 0,05 mm.

With the present invention, a blockchain database for certifying and/or verifying an additive manufacturing process (as described) is provided, wherein each layer is linked in a separate block of the blockchain BC (cf. dashed line in figure 1). The linkage or chaining of the layers L1, L2 in the different (virtual) blocks (cf. reference numerals B1, B2) is illustrated by the horizontal arrows connecting layers and blocks, respectively. Thereby, layer L1 is linked to block B1 and layer L2 is linked to block B2. Preferably, during the additive manufacture of the component 10, each following layer is linked to an additional block up to the situation, wherein the final layer LN is linked to the final block BN, as shown on the right in Figure 1. Said connection or linkage is, of course, to be understood as a data processing operation.

Each layer may, thus, distinctly correspond to one block of the blockchain BC, or vice versa.

Each blockchain BC may, in turn, distinctly correspond to one transaction or build job or manufacturing process, e.g. carried out in the additive manufacturing device 100.

By means of Figure 1, also a method of encoding data of each layer of the component is described:
A blockchain can be perceived as a decentralized and distributed digital node that is used to record transactions, in the present case, additive manufacturing processes across many computers or AM machines so that the record cannot be altered retroactively without the alteration of all subsequent blocks, i.e. layers and the corruption of the network. Said record may, thus, be immutable and/or auditable.

This manipulation-proof functionality can be achieved in that each block (cf. B1, B2) includes a hash or hash value of the previous block, thereby linking the two blocks. Particularly, block B2 includes hash H1. The mentioned block BN will then finally include hash of block "N-1" (not explicitly indicated).

The accordingly linked blocks B1, B2 form a chain of blocks, the blockchain BC. This iterative process confirms the integrity of the previous block, all the way back to the original genesis block. Thereby, integrity or authenticity of the whole process, consequently tool path or preferably additive layerwise buildup of the component 10 is ensured. According to the present invention, and similar to of transactions of the digital currency bitcoin, each block comprises or provides or is assigned to data, such as a dataset or pieces of information of the single layer of or for the component 10. Said data information, preferably, comprise a plurality of subdata which preferably comprehensively describe the layer which is actually to be additively manufactured or as the case may be the properties of the as-manufactured layer.

Particularly, a data or dataset D1 comprises holds and/or records subdata or corresponding information I1, 12 to IN, which is illustrated in the circle connected with the reference numeral D1 in block B1 in Figure 1. Accordingly, the dataset D2 of block B2 - and any further dataset of one of the blocks B1, B2 to BN - holds different pieces of information 12 to IN preferably corresponding to the same types of information, such as process parameters, as dataset D1 of block B1 does (cf. also D2 and DN).

The values or pieces of information I1, 12 to IN in Figure 1 preferably denote CAD-data, such as geometry data, CAM-data numerical control data for the component. Additionally or alternatively, the values I1, 12 to IN (of each dataset D1, D2) may denote or represent data or information collected or read out from the manufacturing device 100 or a further sensor device. Thus, I1, 12 or any further value comprised by each of the data or datasets D1, D2 may comprise temperature data, pressure data, gas flow data and/or data describing beam properties, microscopical information, such as image data or information about a powder bed and/or melt pool during the additive manufacture in the device 100.

The number of parameters accordingly describing or (comprehensively) characterizing a layer for a structurally sophisticated component 10 may easily exceed the number of 100. Just to give further examples of the mentioned values I1, 12 to IN, said information or pieces of information may relate to: Layer thickness, melt pool geometry, heat impact per volume or area unit, laser wavelength, laser powder, hatching speed, hatching distance, i.e. distance of adjacent scanning lines, beam speed, geometry of beam spot, beam angle, type of purge gas, flow rate of purge gas, flow rate of possible exhaustion gas, states of gas valves, set ambient pressure prior to or during build job, state of base material, i.e. the quality, and many more. Said pieces or types of information or required parameters may easily exceed the number of 100, as such high numbers are expedient for setting up a reproducible additive manufacturing process. Figure 2 shows a more general schematic of the distributed network 200 including the functionality as described by way of Figure 1. The network 200 comprises a plurality of nodes on nodes represented by different additive manufacturing devices AMD1 and AMD2 and an exemplary client interface C1.

The nodes or nodes (not explicitly indicated) are connected in the network via the blockchain BC of Figure 1 in a readable or encrypted way, such that e.g. authorized party client of the manufacturer who controls or operates the devices can access the network or interact therewith. Said access, preferably, implies management of storage or loading of huge amounts of data, such as gigabytes per hour, which may be stored in a cloud-based service or system, wherein only the encryption relevant information or hash values may be subject to the blockchain database or network.

In contrast to the additive manufacturing devices as shown in Figure 2, said nodes and nodes may be represented by any (authorized) digital interfaces such that authorized clients (cf. C1 in Figure 2) can access or transact with the network 200 and/or the blockchain BC.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Blockchain (BC) database representing an additive manufacturing process comprising a plurality of data blocks (B1, B2), wherein integrity of the blockchain (BC) is ensured by cryptographic encoding of consecutive blocks (B1, B2) of the blockchain (BC), and wherein each block (B1, B2) of the blockchain (BC) holds data (D1, D2, I1, 12) about an additive manufacturing process of a component (10) which is to be manufactured via an additive manufacturing device (100), wherein data (D1, D2, I1, 12) of each layer (L1, L2) for the component (10) is linked in a separate block (B1, B2) of the blockchain (BC).

2. Blockchain (BC) according to claim 1, wherein data (D1, D2, I1, 12) of layers (L1, L2) which are to be manufactured consecutively are linked in consecutive blocks (B1, B2) of the blockchain (BC).

3. Blockchain (BC) according to claim 1 or 2, wherein the data (D1, D2, I1, 12) of each layer (L1, L2) comprises CAD-data, such as geometry data, CAM-data and/or numerical control data for the component.

4. Blockchain (BC) according to one of the previous claims, wherein the data (D1, D2, I1, 12) of each layer (L1, L2) comprises data collected or read out from the manufacturing device (100) or a further sensor device, such as temperature data, pressure data, gas flow data and/or data describing beam properties.

5. Blockchain (BC) according to one of the previous claims, wherein the data (D1, D2, I1, 12) of each layer (L1, L2) comprises optical, microscopy and/or image information.

6. Blockchain (BC) according to one of the previous claims, wherein the data (D1, D2, I1, 12) of each layer (L1, L2) comprises information about a melt pool.

7. Computer program product comprising the blockchain (BC) according to one of the previous claims.

8. Distributed network (200), comprising a plurality of nodes, wherein said nodes are connected via the blockchain according to one of the previous claims either in a readable or encrypted way such that an authorized party, such as a client or an additive manufacturing device (100), can access the network.

9. Use of a blockchain database (BC) according to one of the previous claims for quality assurance in the additive manufacture of the component (10), particularly for enabling a manipulation-proof documentation of the manufacturing process.

10. Method of encoding data (D1, D2, I1, 12) of each layer (L1, L2) of the component (10) via the additive manufacturing device in a separate block (B1, B2) of the blockchain (BC) according to one of claims 1 to 7.
